# EUROPEAN PATENT APPLICATION

(11) **EP 4 838 445 A1**
(43) Date of publication of application: **11.11.2026**
(21) Application number: 26175736.3
(22) Date of filing: 30.04.2026
(51) Int. Cl.: G06Q 30/01, G06N 20/00, H04L 51/02

(54) **ADAPTIVE MULTI-CHANNEL COMMUNICATION ANALYSIS AND RESPONSE SYSTEM**

(30) Priority: 07.05.2025 US 202519201762
(71) Applicant: Mitel Networks Corporation, Ottawa, Ontario K2K 3K1 (CA)
(72) Inventor: Brochonski, Michael, 82620265 Curitiba (BR); Braganza, Jonathan, Ottawa, K2E 6P2 (CA); Murthy, Tejas, 56008 Bangalore (IN); Naidoo, Logendra, Ottawa, K1S 0W8 (CA)
(74) Representative: Venner Shipley LLP

(57) **Abstract**

Systems and methods including one or more processors and one or more non-transitory storage devices storing computing instructions configured to run on the one or more processors and perform acts of receiving user input from a user in real-time from a first communication channel; processing the user input to identify user information and an intent classification of the user input; retrieving in real-time, from an encrypted personal vault or a second communication channel, a plurality of relevant historical entries to the user input based on the user information and the intent classification; analyzing the plurality of relevant historical entries to determine a context relevance score for each of the plurality of relevant historical entries; and generating recommended actions in response to the user input from the user based on the context relevance scores and the plurality of relevant historical entries.

## Description

### TECHNICAL FIELD

This disclosure relates generally to virtual communication methods and systems and more particularly to methods and systems for analyzing communications across multiple communication channels and generating responses based on the analysis.

### BACKGROUND

In modem virtual communication systems, users seeking support for an issue may use multiple modes or channels of communication to contact a desired entity, such as via phone, e-mail, video call, virtual chat, etc. Existing systems have attempted to consolidate the data from the multiple sources of communication. These systems have included User Relationship Management (CRM) systems, which can consolidate historical data but do not include real-time "in the moment" synchronization, leaving gaps in ongoing issue resolution. Other existing systems, such as omni-channel solutions, can connect multiple communication platforms (e.g., email, messaging, project management tools) but are not sensory (e.g., context-aware concerning live updates), nor do they generate a unified thread of ongoing interactions. Artificial Intelligence (AI) chatbots can address simple, predefined queries but are inadequate for resolving complex, multi-channel issues. Knowledge-based (KB) systems can provide template solutions that do not adapt dynamically to real-time scenarios.

Other existing approaches to managing cross-channel communications have included email threading systems and enterprise communication hubs. While these solutions attempt to centralize communications and group related messages, they remain limited to single channels or struggle with comprehensive integration, ultimately failing to detect redundancy across different platforms. More recent attempts have also included basic search aggregators that offer keyword searches across channels, and channel integration tools that enable cross-posting between platforms. However, these solutions suffer from fragmentation across multiple platforms, leading to context loss, information redundancy, and communication inefficiencies. Users can miss historical context when drafting messages, resulting in duplicate inquiries, inconsistent responses, and unnecessary back-and-forth communications that delay decision-making and project progression.

Therefore, there is a need for improved methods and systems to provide communication analysis across multiple communication channels and generate responses based on the analysis.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements and wherein:
FIG. 1 is a block diagram of a system according to aspects of this disclosure;
FIG. 2 is a flowchart for a method for analyzing cross-channel communications and providing suggestions to resolve the communications according to aspects of this disclosure;
FIG. 3 is a block diagram of a process for real-time analysis of draft messages across communication platforms according to aspects of this disclosure;
FIG. 4 is a flow diagram of a method for user interaction analysis and generation of suggestions based on the analysis using the technical architecture of the system according to aspects of the disclosure;
FIG. 5 is an example system utilizing an example UI according to aspects of this disclosure;
FIG. 6 is a flow diagram of a method for user interaction analysis and generation of recommended actions based on the analysis according to aspects of the disclosure; and
FIG. 7 illustrates a representative block diagram of a computer system, according to an embodiment.

It will be appreciated that elements in the figures are illustrated for simplicity and clarity and have not necessarily been drawn to scale. For example, the dimensions of some of the elements in the figures may be exaggerated relative to other elements to help to improve understanding of illustrated embodiments of the present invention.

### DETAILED DESCRIPTION

The description of exemplary embodiments of the present invention provided herein is merely exemplary and is intended for purposes of illustration only; the following description is not intended to limit the scope of the invention as claimed. Moreover, recitation of multiple embodiments having stated features is not intended to exclude other embodiments having additional features or other embodiments incorporating different combinations of the stated features.

It must also be noted that, the term "exemplary" is used in the sense of "example," rather than "ideal."

It must also be noted that, as used in the specification and the appended claims, the singular forms "a," "an" and "the" include plural referents unless the context clearly dictates otherwise.

By "comprising" or "containing" or "including" it is meant that at least the named compound, element, particle, or method step is present in the composition or article or method, but does not exclude the presence of other compounds, materials, particles, method steps, even if the other such compounds, material, particles, method steps have the same function as what is named.

Relative terms, such as "about," "substantially," or "approximately" are used to include small variations with specific numerical values (e.g., +/- x%,), as well as including the situation of no variation (+/-0%). In various embodiments, the numerical value x is less than or equal to 10 - e.g., less than or equal to 5, to 2, to 1, or smaller.

As used herein, "database" refers to any suitable database for storing information, electronic files or code to be utilized to practice embodiments of this disclosure. As used herein, "server" refers to any suitable server, computer or computing device for performing functions utilized to practice embodiments of this disclosure.

As used herein, "software" refers to programs or other operating information utilized by a processor or other computing hardware.

As used herein, "meeting" means a meeting or conference such as telephonic, video, audio/video, in-person, a hybrid of any of the preceding, and any type of meeting involving multiple participants.

This disclosure provides for systems and methods for analyzing communications across multiple communication channels and generating responses based on the analysis. In one aspect, the present disclosure may include a method for real-time intelligent cross-channel communication assessment that can prevent communication errors and redundancies. The method may include a multi-step process involving: (1) real-time analysis of draft messages from an end user using transformer models to understand intent and content of the draft messages, (2) hybrid search across a user's encrypted personal communication vault utilizing both dense vector and semantic indexing, (3) automated detection of conflicts, redundancies, or missing context through ensemble search algorithms, and (4) presentation of artificial intelligence (AI)-powered insights with clear rationale derived from historical communication data. The method can maintain privacy of the data through isolated personal vaults while providing actionable suggestions while a user is composing a message. The present system can also enable real-time reconciliation and synchronization of user interactions using identity mining across multiple communication channels by creating a dynamically updated "stitch" that can unify ongoing interactions into a single, cogent thread. The system can analyze historical data and recommend optimized responses based on successful resolutions of similar cases. As new inputs are received, the system may continuously update the stitched thread and adapt its recommendations, to provide live, actionable insights to resolve issues efficiently and improve user satisfaction.

Particular embodiments of the subject matter described in this disclosure may be implemented to realize one or more of the following advantages. Existing systems for user support interactions across multiple modes of communication lack synchronization, which can lead to inefficiencies. Users may be forced to repeat themselves when transitioning between channels such as calls, emails, or social media. This creates frustration and reduces satisfaction. At the same time, user service agents may face dilemmas in consolidating information from fragmented sources. Current systems rely on historical data but may not provide real-time visibility. This gap leads to delays and absence of resolution hot-sites and increases the likelihood of errors.

The present system can unify live user interactions happening across multiple channels in real time to prevent misappropriation of contact center resources. For example, a common occurrence may be that a user is using an online chat session, a social media post, and a voice-call into support concurrently or using multiple chat sessions at the same time to accelerate their position in the queue. Unlike existing systems, the present system can actively "stitch" ongoing communications from the same user, creating a live thread visible to user service agents. This may include emails, calls, chat sessions, and social media activity. The system can identify the person by consolidating known identity information available, analyze historical resolutions, and recommend optimized responses to the user. The system can provide actionable strategies tailored to the current issue, as opposed to overwhelming agents with raw data. The system can continuously adapt to live updates, ensuring agents stay informed and efficient. The provided strategies can actively guide agents on the best way to respond, based on what's worked best previously in dealing with the particular sentiment, anger, absence of technical information, and solutions that worked in the past.

Existing methods also rely on manual search across platforms, human memory, and disconnected documentation systems. These approaches are flawed due to limited cross-platform context awareness, inability to detect potential conflicts with previous communications, lack of an automated mechanism for ensuring completeness of response, poor integration of historical resolution data, and lack of systematic learning from successful communication patterns. The present system can address these limitations by implementing real-time analysis of communication intent, automated historical pattern recognition, and pre-transmission verification to optimize message relevance and completeness while maintaining data privacy through an encrypted vault architecture. In addition, unlike legacy search, which operates independently of user intent or history, the present system can perform ongoing analysis of real-time communication, conversation flow, and personal communication history to supply proactive, context-aware suggestions.

Also, standard search methods retrieve information from static indices, focusing on retrieving matches to predefined queries, while real-time communication involves dynamic, context-sensitive interactions that adapt to live, unfolding dialogues. The present system can provide a combination of real-time analysis and personal communication vault architecture. Unlike existing solutions that typically operate in silos, the proposed system can perform a hybrid search across all communication channels the user has provided access to while maintaining strict privacy through user-specific encrypted vaults. The system's transformer model can analyze message intent and content in real-time, providing contextually aware suggestions based on actual historical communications rather than generic patterns. Furthermore, the technical advantage of the present system lies in its dual-index architecture (e.g., dense vectors and semantic indexes) combined with comprehensive metadata tracking and relationship mapping. While existing systems may focus on simple pattern matching or generic AI suggestions, the present system can provide explained rationales based on actual communication history. This prevents communication mistakes before they happen, rather than dealing with aftermath.

The system's architecture can also resolve several shortcomings of existing solutions, including cross-channel blindness (e.g., current tools can't see or analyze communications across different platforms), context-free suggestions (e.g., existing solutions provide generic recommendations without understanding the full communication history), and black-box recommendations (e.g., most tools don't explain why they're making specific suggestions, whereas this system provides clear rationales based on historical data and success patterns). These improvements directly address real-world communication challenges while maintaining privacy and providing real-time assistance with clear, data-driven explanations for every suggestion.

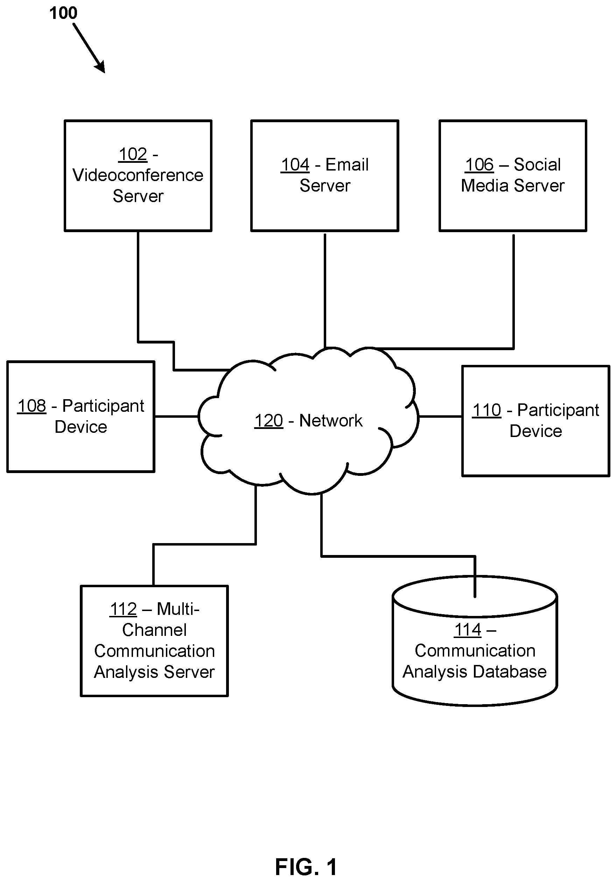

Turning to the figures, FIG. 1 illustrates a block diagram of a system 100 that can be employed for analyzing communications across multiple communication channels and generating responses based on the analysis, as described in greater detail below. System 100 is merely exemplary and embodiments of the system are not limited to the embodiments presented herein. System 100 can be employed in many different embodiments or examples not specifically depicted or described herein. In some embodiments, certain elements or modules of system 100 can perform various procedures, processes, and/or activities. In these or other embodiments, the procedures, processes, and/or activities can be performed by other suitable elements or modules of system 100.

Generally speaking, system 100 can be implemented with hardware and/or software. Part or all of the hardware and/or software implemented in system 100 can be conventional or part or all of the hardware and/or software can be customized (e.g., optimized) for implementing part or all of the functionality of system 100 described herein.

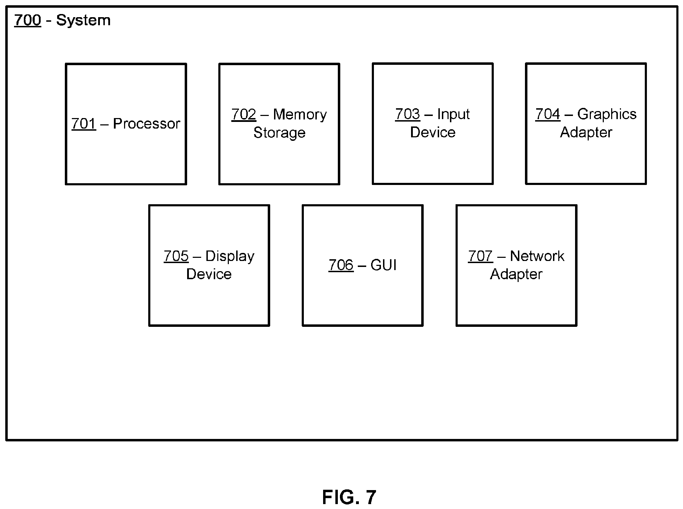

System 100 can include videoconference server 102, email server 104, social media server 106, participant devices 108, 110, multi-channel communication analysis server 112, and/or communication analysis database 114. Videoconference server 102, email server 104, social media server 106, participant devices 108, 110, and/or multi-channel communication analysis server 112 can each be a computer system, such as computer system 700 (FIG. 7), as described below, and can each be a single computer, a single server, a cluster or collection of computers or servers, or a cloud of computers or servers.

Participant devices 108, 110 can comprise any of the elements described in relation to computer system 700 (FIG. 7). For example, participant devices 108, 110 can be mobile devices. A mobile device can refer to a portable electronic device (e.g., an electronic device easily conveyable by hand by a person of average size) with the capability to present audio and/or visual data (e.g., text, images, videos, music, etc.). For example, a mobile electronic device can comprise at least one of a digital media player, a cellular telephone (e.g., a smartphone), a personal digital assistant, a handheld digital computer device (e.g., a tablet personal computer device), a laptop computer device (e.g., a notebook computer device, a netbook computer device), a wearable user computer device, or another portable computer device with the capability to present audio and/or visual data (e.g., images, videos, music, etc.). Thus, in many examples, a mobile electronic device can comprise a volume and/or weight sufficiently small as to permit the mobile electronic device to be easily conveyable by hand.

Exemplary mobile electronic devices can comprise (i) an iPod^{®}, iPhone^{®}, iTouch^{®}, iPad^{®}, MacBook^{®} or similar product by Apple Inc. of Cupertino, California, United States of America, (ii) a Pixel^{™} product or a similar product by Google Inc. of Menlo Park, California, United States of America, (iii) a Lumia^{®} or similar product by the Nokia Corporation of Keilaniemi, Espoo, Finland, and/or (iv) a Galaxy^{™} or similar product by the Samsung Group of Samsung Town, Seoul, South Korea. Further, in the same or different embodiments, a mobile electronic device can comprise an electronic device configured to implement one or more of (i) the iPhone^{®} operating system by Apple Inc. of Cupertino, California, United States of America, (ii) the Android^{™} operating system Google Inc. of Menlo Park, California, United States of America, (iii) the Palm^{®} operating system by Palm, Inc. of Sunnyvale, California, United States, (iv) the Windows Mobile^{™} operating system by Microsoft Corp. of Redmond, Washington, United States of America, or (v) the Symbian^{™} operating system by Nokia Corp. of Keilaniemi, Espoo, Finland.

Further still, the term "wearable device" as used herein can refer to an electronic device with the capability to present audio and/or visual data (e.g., text, images, videos, music, etc.) that is configured to be worn by a user and/or mountable (e.g., fixed) on the user of the wearable user computer device (e.g., sometimes under or over clothing; and/or sometimes integrated with and/or as clothing and/or another accessory, such as, for example, a hat, eyeglasses, a wrist watch, shoes, etc.). A wearable user computer device can comprise a mobile electronic device, and vice versa. However, a wearable user computer device does not necessarily comprise a mobile electronic device, and vice versa.

In specific examples, a wearable user computer device can comprise a head mountable wearable user computer device (e.g., one or more head mountable displays, one or more eyeglasses, one or more contact lenses, one or more retinal displays, etc.) or a limb mountable wearable user computer device (e.g., a smart watch, smart ring, etc.). In these examples, a head mountable wearable user computer device can be mountable in close proximity to one or both eyes of a user of the head mountable wearable user computer device and/or vectored in alignment with a field of view of the user.

In more specific examples, a head mountable wearable user computer device can comprise (i) Google Glass^{™} product or a similar product by Google Inc. of Menlo Park, California, United States of America; (ii) the Eye Tap^{™} product, the Laser Eye Tap^{™} product, or a similar product by ePI Lab of Toronto, Ontario, Canada; (iii) Apple Vision Pro^{™} product or similar product by Apple Inc. of Cupertino, California, United States of America; and/or (iv) the Raptyr^{™} product, the STAR 1200^{™} product, the Vuzix Smart Glasses M100^{™} product, or a similar product by Vuzix Corporation of Rochester, New York, United States of America. In other specific examples, a head mountable wearable user computer device can comprise the Virtual Retinal Display^{™} product, or similar product by the University of Washington of Seattle, Washington, United States of America. Meanwhile, in further specific examples, a limb mountable wearable user computer device can comprise the iWatch^{™} product, or similar product by Apple Inc. of Cupertino, California, United States of America, the Galaxy Gear or similar product of Samsung Group of Samsung Town, Seoul, South Korea, the Moto 360 product or similar product of Motorola of Schaumburg, Illinois, United States of America, and/or the Zip^{™} product, One^{™} product, Flex^{™} product, Charge^{™} product, Surge^{™} product, or similar product by Fitbit Inc. of San Francisco, California, United States of America.

Videoconference server 102, email server 104, social media server 106, one or more participant devices 108, 110, and/or multi-channel communication analysis server 112 can each comprise one or more input devices (e.g., one or more keyboards, one or more keypads, one or more pointing devices such as a computer mouse or computer mice, one or more touchscreen displays, a microphone, etc.), and/or can each comprise one or more display devices (e.g., one or more monitors, one or more touch screen displays, projectors, etc.). In these or other embodiments, one or more of the input device(s) can be similar or identical to input device 703 (FIG. 7). Further, one or more of the display device(s) can be similar or identical to display device 705 (FIG. 7). The input device(s) and the display device(s) can be coupled to the processing module(s) and/or the memory storage module(s) of videoconference server 102, email server 104, social media server 106, multi-channel communication analysis server 112, and/or one or more of participant devices 108, 110 in a wired manner and/or a wireless manner, and the coupling can be direct and/or indirect, as well as locally and/or remotely. As an example of an indirect manner (which may or may not also be a remote manner), a keyboard-video-mouse (KVM) switch can be used to couple the input device(s) and the display device(s) to the processing module(s) and/or the memory storage module(s). In some embodiments, the KVM switch also can be part of videoconference server 102, email server 104, social media server 106, one or more participant devices 108, 110, and/or multi-channel communication analysis server 112. In a similar manner, the processing module(s) and the memory storage module(s) can be local and/or remote to each other.

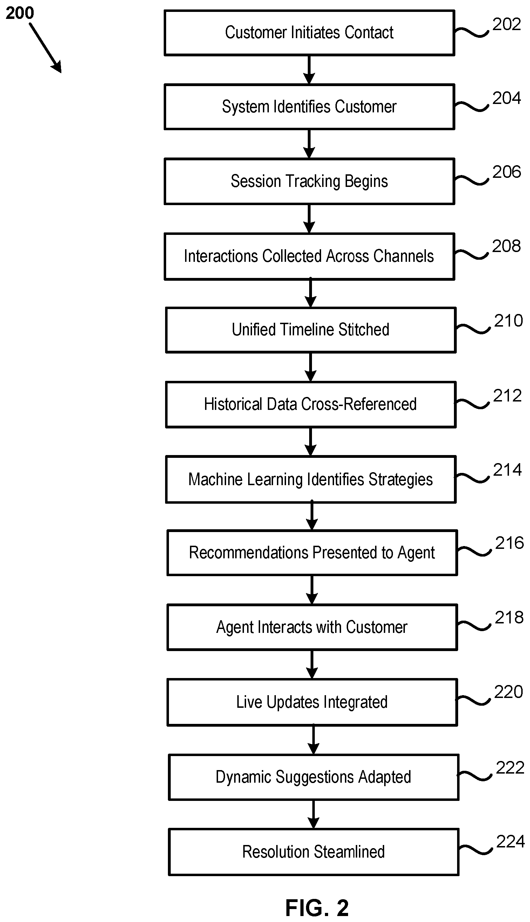

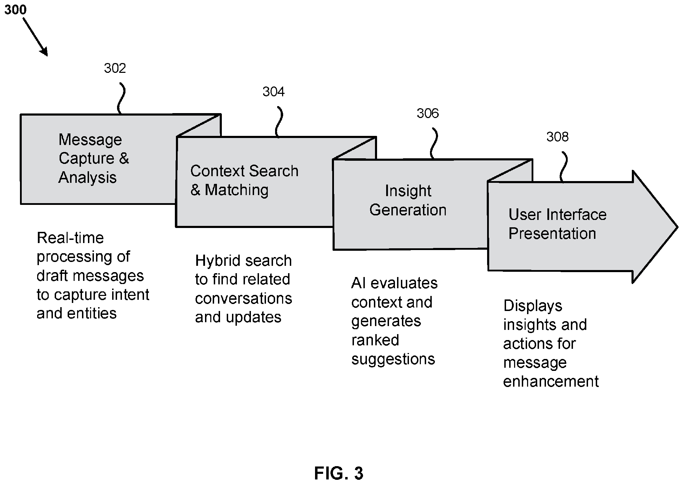

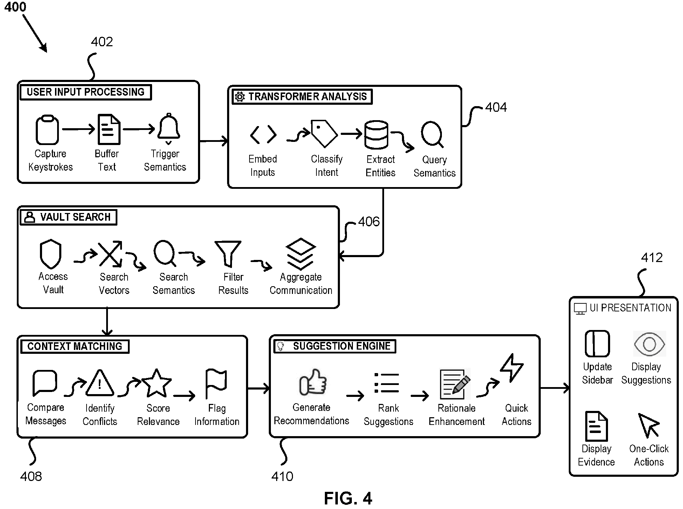

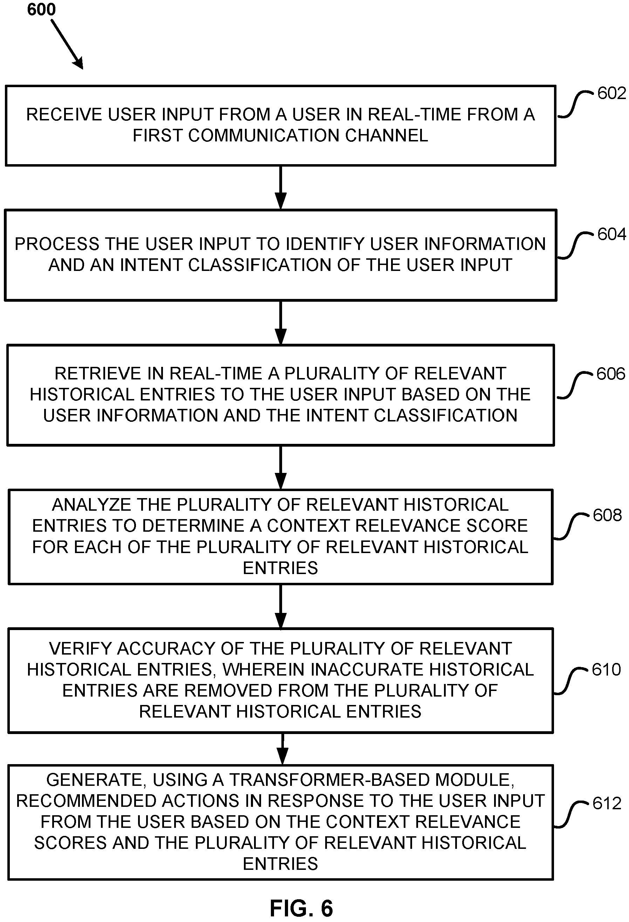

Videoconference server 102 can host and/or run one or more videoconference software platforms. Email server 104 can host and/or run one or more email software platforms. Social media server 106 can host and/or run one or more social media software platforms. Multi-channel communication analysis server 112 can host a system for analyzing multi-channel communications as described herein. For example, multi-channel communication analysis server 112 can perform one or more steps of method 200 (FIG. 2), process 300 (FIG. 3), method 400 (FIG. 4), and/or method 600 (FIG. 6). In some embodiments, multi-channel communication analysis server 112 can be embodied in and/or distribute a software application capable of performing one or more steps of method 200 (FIG. 2), process 300 (FIG. 3), method 400 (FIG. 4), and/or method 600 (FIG. 6). The software application can be installed/installable on one or more of participant devices 108, 110.

Videoconference server 102, email server 104, social media server 106, multi-channel communication analysis server 112, and/or participant devices 108, 110 can communicate or interface (e.g., interact) with one another through network 120. Network 120 can be an intranet that is not open to the public, a mesh network of individual systems, and/or a distributed system. Accordingly, in many embodiments, videoconference server 102, email server 104, social media server 106, and/or multi-channel communication analysis server 112 (and/or the software used by such systems) can refer to a back end of system 100 operated by an operator and/or administrator of system 100, and participant devices 108, 110 (and/or the software used by such systems) can refer to a front end of system 100 used by one or more participants, respectively. An operator and/or administrator of system 100 can manage system 100, the processing module(s) of system 100, and/or the memory storage module(s) of system 100 using the input device(s) and/or display device(s) of system 100.

Videoconference server 102, email server 104, social media server 106, multi-channel communication analysis server 112, and/or participant devices 108, 110 also can be configured to communicate with one or more databases. The one or more databases may include the communication analysis database 114. The communication analysis database 114 may include data related to communication analysis, such as training data for the multi-channel communication analysis server 112. The one or more databases can also comprise a historical communications database that stores records about past communications. A historical communications database can also comprise an interaction database containing information about interactions of participant devices with the various communication apparatus (videoconference, e-mail, telephone, etc.). These interactions can be tied to a unique identifier (e.g., an IP address, an advertising ID, device ID, etc.) and/or a user account. In embodiments where a participant interacts with a communication apparatus before logging into a user account, data stored in the one or more databases that is associated with a unique identifier can be merged with and/or associated with data associated with the user account. Data can be deleted from a database when it becomes older than a maximum age, which can be set by an administrator of system 100. Data collected in real-time can be streamed to a database for storage, thereby increasing a storage speed of a database.

The one or more databases can be stored on one or more memory storage modules (e.g., non-transitory memory storage module(s)), which can be similar or identical to the one or more memory storage module(s) (e.g., non-transitory memory storage module(s)) described above with respect to computer system 700 (FIG. 7). Further, the one or more databases can each be stored on a single memory storage module of the memory storage module(s), and/or the non-transitory memory storage module(s) storing the one or more databases or the contents of that particular database can be spread across multiple ones of the memory storage module(s) and/or non-transitory memory storage module(s) storing the one or more databases, depending on the size of the particular database and/or the storage capacity of the memory storage module(s) and/or non-transitory memory storage module(s). In various embodiments, databases can be stored in a cache (e.g., MegaCache) for immediate retrieval on-demand. The one or more databases can each comprise a structured (e.g., indexed) collection of data and can be managed by any suitable database management systems configured to define, create, query, organize, update, and manage database(s). Exemplary database management systems can include MySQL (Structured Query Language) Database, PostgreSQL Database, Microsoft SQL Server Database, Oracle Database, SAP (Systems, Applications, & Products) Database, IBM DB2 Database, and/or NoSQL Database.

Meanwhile, communication between videoconference server 102, email server 104, social media server 106, participant devices 108, 110, multi-channel communication analysis server 112, and/or the one or more databases can be implemented using any suitable manner of wired and/or wireless communication. Accordingly, system 100 can comprise any software and/or hardware components configured to implement the wired and/or wireless communication. Further, the wired and/or wireless communication can be implemented using any one or any combination of wired and/or wireless communication network topologies (e.g., ring, line, tree, bus, mesh, star, daisy chain, hybrid, etc.) and/or protocols (e.g., personal area network (PAN) protocol(s), local area network (LAN) protocol(s), wide area network (WAN) protocol(s), cellular network protocol(s), powerline network protocol(s), etc.). Exemplary PAN protocol(s) can comprise Bluetooth, Zigbee, Wireless Universal Serial Bus (USB), Z-Wave, etc.; exemplary LAN and/or WAN protocol(s) can comprise Institute of Electrical and Electronics Engineers (IEEE) 802.3 (also known as Ethernet), IEEE 802.11 (also known as WiFi), etc.; and exemplary wireless cellular network protocol(s) can comprise Global System for Mobile Communications (GSM), General Packet Radio Service (GPRS), Code Division Multiple Access (CDMA), Evolution-Data Optimized (EV-DO), Enhanced Data Rates for GSM Evolution (EDGE), Universal Mobile Telecommunications System (UMTS), Digital Enhanced Cordless Telecommunications (DECT), Digital Advanced Mobile Phone System (AMPS) (IS-136/Time Division Multiple Access (TDMA)), Integrated Digital Enhanced Network (iDEN), Evolved High-Speed Packet Access (HSPA+), Long-Term Evolution (LTE), WiMAX, etc. The specific communication software and/or hardware implemented can depend on the network topologies and/or protocols implemented, and vice versa. In many embodiments, exemplary communication hardware can comprise wired communication hardware including, for example, one or more data buses, such as, for example, universal serial bus(es), one or more networking cables, such as, for example, coaxial cable(s), optical fiber cable(s), and/or twisted pair cable(s), any other suitable data cable, etc. Further exemplary communication hardware can comprise wireless communication hardware including, for example, one or more radio transceivers, one or more infrared transceivers, etc. Additional exemplary communication hardware can comprise one or more networking components (e.g., modulator-demodulator components, gateway components, etc.).

FIG. 2 is a block diagram of a method 200 for analyzing cross-channel communications and providing suggestions to resolve the communications according to aspects of this disclosure. The method 200 begins at block 202, where the user may initiate contact with a communication apparatus. The method 200 may be initiated from the commencement of use of the communication apparatus by a user. For example, the method 200 may be initiated by the beginning of a video call, teleconference, virtual meeting, email, chat box message, and the like. A user may initiate contact with the communication apparatus through any channel such as phone, email, chat, social media, etc. For example, the user may call up a user service number via phone, may send a complaint to the user service via email, may post on social media that they have a complaint, and the like.

At block 204, the system can identify the user using unique identifiers. Unique identifiers may include account numbers, email addresses, social media handles, etc. The system may look at multiple communications using various communication channels (e.g., from the videoconference server 102, the email server 104, the social media server 106) and attempt to identify the user based on the unique identifiers. For example, the system may determine that multiple communications are from the same person based on similar unique identifiers.

The system may also calculate a similarity score to identify the user. For example, the similarity score may be calculated as a function of a natural language processing (NLP) based text interaction match, a voice pattern match, a behavioral pattern match, and a weight for each (e.g., similarity score = (Weight for Text Similarity × NLP based Text Interaction Match) + (Weight for Voice Similarity × Voice Pattern Match) + (Weight for Behavioral Similarity × Behavioral Pattern Match)). The NLP based text interaction match may represent the degree to which the text between multiple interactions matches. The voice pattern match may represent the degree to which the voices between multiple interactions match. The behavioral pattern match may represent a degree to which the behavioral patterns between multiple interactions match. The weight may represent how much emphasis each of the matches should have on the overall similarity score. The system may flag redundancy if the similarity score exceeds a predefined threshold (e.g., "Highly Likely Same User").

At block 206, the system may initiate a session to track and consolidate all ongoing interactions related to the user. The session may track the user interactions over a certain period of time (e.g., the last 24 hours, the last week, the last month, etc.). User interactions that appear to be redundant or related may be consolidated for efficiency and to reduce duplicate interactions.

At block 208, the system may collect the user interactions across channels. The system may collect the interactions as part of the session. For example, the system may collect the identified user's social media post, email, phone call, etc.

At block 210, the system may stitch interactions together into a unified timeline. The system may use real-time data streams and metadata tagging to stitch the interactions together. Each communication may be time-stamped and categorized by its source channel (e.g., social media, telephone, email, etc.). In some aspects, low-latency message delivery and data consistency are maintained using tools like Apache Kafka. The system may stitch logic maps of overlapping interactions by matching identifiers, timestamps, and context keywords. The logic map may be a representation that shows the relationship between the various interactions.

At block 212, the system can cross-reference the unified timeline with historical resolution data stored in a centralized database. Historical resolution data may include data related to resolutions of similar issues, problems, complaints, etc. of the user. The historical resolution data may be stored in, for example, the communication analysis database 114 of FIG. 1. As an example, the user may be complaining on their social media about a specific technical issue they are having with a software. The system can cross-reference the user's complaint with historical resolution data about how to resolve the specific technical issue.

At block 214, the system may use machine learning models trained on past cases to identify similar scenarios and extract effective strategies. The past cases may include previous interactions with this user and/or other users. The machine learning model may be trained to determine effective strategies in response to the user based on previously proposed solutions to the past cases. The machine learning models may be a transformer model, such as a large language model (LLM).

At block 216, the system may prioritize and recommended the effective strategies to a customer service agent. The system may identify if a similar issue in the past cases required escalation or a specific script in order to prioritize the effective strategies. The system may also rank the strategies based on relevance and recommend the strategies based on the ranking.

At block 218, the agent can interact with the user. For example, the agent may provide the recommended strategies to the user and the user can respond to the agent with a choice to perform the suggested strategies, take no action, or indicate a different strategy. The system may also interact with the user without the agent and automatically communicate and respond to the user on its own.

Then, at block 220, as the agent (or system) interacts with the user, the system may monitor live updates from all channels. As an example, the system can receive new data and/or updates from the various communication channels that may change the proposed strategy or response.

At block 220, the system may integrate the live updates. New inputs, such as social media posts or emails, can be stitched into the existing timeline in real time. In some aspects, event-driven architectures can trigger immediate stitching of new data into the consolidated thread.

At block 222, the system can update the dynamic suggestions as new inputs come in. For example, recommendations can be updated dynamically based on the evolving interactions. If part of the issue is resolved via one channel, the system can adjust its suggested next steps (e.g., a chat bot is responding to the user's request at the same time a customer service representative is speaking with the user on the phone). The system can provide actionable guidance, such as escalation paths or closing statements if the issue is resolved.

At block 224, the system can streamline the suggestions or proposed resolutions. The system can allow agents to access a live, consolidated view of all interactions across communication channels, eliminating redundancy of information. Therefore, users do not need to repeat themselves, as agents work with full context. The system can provide continuous updates and actionable insights that streamline resolutions and enhance user satisfaction. For example, even during widespread issues like an outage, the system ensures proactive and efficient support. By integrating live data from every channel and optimizing agent responses on the fly, the present system can reduce frustration, speed up resolution times, and turn chaos into a coordinated effort.

FIG. 3 is a block diagram of a process 300 for real-time analysis of draft messages across communication platforms according to aspects of this disclosure. The method 300 may be initiated from the commencement of use of a communication apparatus by a user. For example, the method 300 may be initiated by the beginning of a video call, teleconference, virtual meeting, and the like.

The process 300 may begin at block 302 with message capture and analysis of incoming user interactions. This may include real-time processing of draft messages of a user (e.g., as the user is typing into the communication apparatus) to capture intent of the user and entities involved in the interaction. In some aspects, a real-time transformer model may process the draft message content. Intent classification and entity extraction may occur during typing. The system may also access a personal vault for historical context retrieval. The system can provide real-time AI-powered analysis of draft messages across communication platforms, preventing redundancy and ensuring contextual completeness while maintaining user privacy through the personal encrypted vaults.

At block 304, the system may perform context search and matching of the user interaction. The system may use a hybrid search, which can combine vector similarity and semantic matching in order to perform the matching of the current user message and past interactions. In addition, the system may query the encrypted personal communication vault. Using the personal communication vault, the system can identify related conversations, decisions, and updates from the user.

At block 306, the system may perform insight generation to generate suggestions in response to the user message. In some embodiments, the system, using AI, may evaluate potential conflicts or missing context from the user interaction (e.g., the user did not include all relevant information/context or presents conflicting information). In some embodiments, the system can generate ranked suggestions in response to the user with supporting evidence for each suggestion and/or compute confidence scores for each recommendation.

At block 308, the system may perform user interface (UI) presentation. The system can present the suggestions to the user via a UI. For example, the system may display a real-time sidebar with contextual insights. In another embodiment, the system may provide one-click actions for message enhancement. In some cases, the system may show clear rationale for each suggestion.

Fig. 4 illustrates a flow diagram of a method 400 of the technical architecture of the system for user interaction analysis and generation of suggestions based on the analysis according to aspects of the disclosure. The method 400 may be triggered upon initiation of a session of the communication apparatus (e.g., video call, voice conference, virtual meeting etc.) or triggered ad-hoc by a user (e.g., user turns on the system 100 when using the communication apparatus).

The method 400 begins at block 402, where the system may perform user input processing. The system can capture keystroke events from the user in real-time, buffer the text from the user, and trigger analysis at semantic breakpoints of the text. The user input processing may be performed using natural language processing methods.

At block 404, the system may perform transformer analysis. The system can use a transformer model to convert the user input to embeddings (e.g., vectors). The transformer model can also classify the user message's intent, extract key entities and topics, and generate semantic search queries to search the vault. For example, the system can create semantic search queries of a particular topic related to the user's input in order to search the vault for entries related to that topic.

At block 406, the system may perform a vault search. The system can access the user's encrypted personal vault, and execute parallel vector and semantic searches, such as searches for a particular topic related to the user's input. The system can filter results by relevance and recency and aggregate related communications, such as communications related to the search topic. For example, if the user input is related to a specific technical problem with a software, the system can filter the results in the vault based on the most recent and relevant responses related to the specific technical problem.

At block 408, the system may perform context matching. The system can compare the current user message against the search results, identify potential conflicts or gaps, calculate context relevance scores, and flag critical missing information. For example, more relevant results may receive a score that may increase the likelihood of being used as part of the suggested response.

At block 410, the system may generate suggestions as a suggestion engine. The system can generate actionable recommendations and/or suggestions, rank the recommendations and/or suggestions by impact, compose enhancement rationales, and create quick-action options.

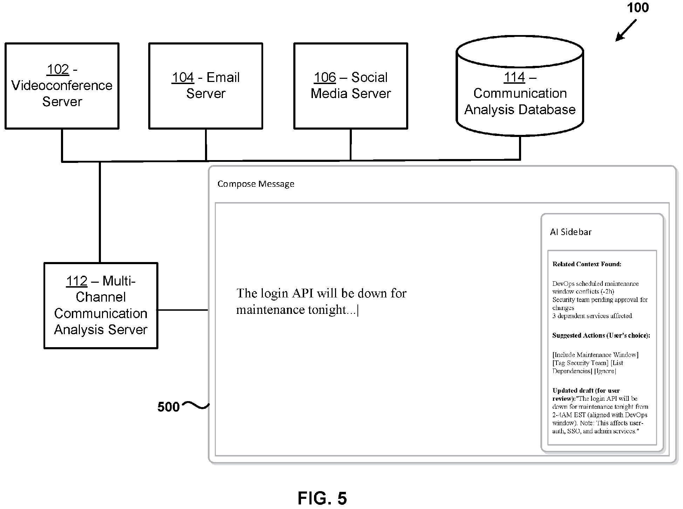

At block 412, the system may include UI presentation. The system can update a sidebar UI with live insights, display ranked suggestions, show supporting evidence, and offer one-click actions for the user. An example of the UI presentation is shown and described with respect to FIG. 5. However, other configurations of the UI may also be possible, such as GUI 706 of FIG. 7.

FIG. 5 illustrates an example system 100 with an example UI 500. As described above, the videoconference server 102, the email server 104, the social media server 106, and the communication analysis database 114 may be in communication with the multi-channel communication analysis server 112. The multi-channel communication analysis server 112 may use the data from the videoconference server 102, the email server 104, the social media server 106, and the communication analysis database 114 to generate recommendations for a user.

As an example, and as shown in the UI 500, a user may be typing a team chat stating "The login API will be down for maintenance tonight..." The AI Sidebar may appear instantly and display "Related Context Found: DevOps scheduled maintenance window conflicts (-2h); Security team pending approval for changes; 3 dependent services affected" as well as "Suggested Actions (User's choice): [Include Maintenance Window] [Tag Security Team] [List Dependencies] [Ignore]." The AI sidebar may also display the reasoning for suggestions, such as "Prevents scheduling conflicts with DevOps; Ensures proper approval flow visibility; and Helps teams prepare for service impacts." The user may then click one of the options. For example, the user may click 'Include Maintenance Window' and 'List Dependencies.' In response, the system may provide an updated draft (for user review), such as: "The login API will be down for maintenance tonight from 2-4AM EST (aligned with DevOps window). Note: This affects user-auth, SSO, and admin services." Then the user can further edit, accept, or ignore the suggestions.

In another example, a project manager may be about to send a collaboration message about a delayed feature release. The system may: (1) detect the draft message content about the delay; (2) find a recent email where the Chief Technology Officer (CTO) already communicated a revised timeline; (3) discover related technical discussions in the team chat channel about the delay's cause; and (4) alert the manager before sending with clear reasoning, such as (i) "The CTO has already communicated this delay (see email from 2 days ago)" and display a rationale: "Duplicating this information could create confusion about which timeline is authoritative" and/or (ii) "Technical team has identified solutions (see linked thread)" and display a rationale: "Including technical context shows comprehensive understanding and prevents follow-up questions." The AI sidebar may also suggest merging this information into a more comprehensive update, may display a learning prompt (e.g., "Consider how combining existing communications creates a more complete narrative"). As a result, instead of creating confusion with partial information, the manager sends a unified message that aligns with existing communications and includes the latest technical context.

In another scenario, a support agent may be responding to a client's technical issue on a chat. In response, the system may (1) analyze the draft response; (2) identify that a similar issue was resolved differently last month, the solution provided then received positive feedback, and a recent email announces a new feature that better addresses this problem; (3) prompt the agent with: (i) the previously successful solution and a rationale: "This approach resolved 93% of similar cases successfully" and (ii) the new feature information and a rationale: "New feature directly addresses the root cause of the issue"; and/or a suggested response combining both insights. The system may also display a learning prompt, such as "Understanding why previous solutions worked helps build better responses." As a result, the agent provides a comprehensive solution that incorporates both proven methods and new capabilities, improving user satisfaction and preventing future follow-ups.

In another example, as a user rapidly types "We'll need to delay the product launch to next week" in a communication channel, the system can: (1) detect the delay announcement intent, (2) discover a recent email where marketing already announced a different timeline, (3) find relevant technical discussions in another communication team/channel explaining the delay's cause, and (4) present an interactive prompt showing: "Warning: Conflicting timeline detected" with options to either view the existing announcement, merge the new technical context from technical team/channel into a comprehensive update, or proceed with the original message. Each option may include a clear rationale (e.g., "Merging recommended: Will prevent confusion about authoritative timeline and includes latest technical context from engineering team") based on actual communication history.

The proposed system can enhance routine communication into informed exchanges by making use of AI analysis in personal communication history while maintaining privacy. It prevents common communication pitfalls through real-time assistance and clear reasoning, ultimately improving team efficiency and reducing miscommunication risks. The system can maintain user agency by providing suggestions and rationale while letting users make the final decisions about their communications.

In one embodiment, the system can implement a multi-modal analysis system that also processes voice messages, meeting transcripts, and shared documents, expanding beyond just text-based communications. The system could incorporate calendar context and project management tools to provide more nuanced suggestions based on scheduled events and project timelines. Another embodiment may include adding a predictive component that anticipates future communication needs based on recurring patterns and project milestones, proactively suggesting draft messages or reminders before they're needed.

FIG. 6 is a flow diagram of a method 600 for user interaction analysis and generation of recommended actions based on the analysis according to aspects of the disclosure. The method 600 may be initiated from the commencement of use of a communication apparatus by a user or ad-hoc by the user. For example, the method 600 may be initiated by the beginning of a video call, teleconference, virtual meeting, and the like or the user turning on the system in the communication apparatus.

The method 600 may begin at block 602 where the system may receive user input from a user in real-time from a first communication channel. The first communication channel may include a phone call, online chat session, email, social media, and the like. For example, the system may receive user input from a draft email that the user is in the process of typing.

At block 604, the system may process the user input to identify user information and an intent classification of the user input. The user information may include a user account number, a user email address, a user account name, and the like. The intent classification may represent an identified purpose or goal behind the user's input, which may be a specific category of intent. In some embodiments, the system may use natural language processing in order to identify the intent classification. Examples of intent classifications may include ordering food, booking a flight, submitting a complaint, etc.

At block 606, the system may retrieve in real-time a plurality of relevant historical entries to the user input based on the user information and the intent classification. The system may retrieve the historical entries from an encrypted personal vault and/or a second communication channel. The encrypted personal vault may be an indexed binary embedding file of historical entries. The indexed binary embedding file may include embeddings stored with in-memory data structures and clustering techniques. The historical entries may be historical entries associated with that user. The second communication channel may include a phone call, online chat session, email, social media, and the like.

The system may retrieve the relevant historical entries by stitching logic maps. For example, the system may stitch logic maps of overlapping historical entries of the user by matching identifiers of the user, timestamps, and context keywords. Then, the system may retrieve the relevant historical entries based on the logic maps.

At block 608, the system may analyze the plurality of relevant historical entries to determine a context relevance score for each of the plurality of relevant historical entries. The context relevance score may indicate the level of relevance of each of the plurality of relevant historical entries to the user input. The system may determine the context relevance score by calculating the score using a weighted function that factors semantic similarity, temporal proximity using a time-decay function, and channel-specific metadata to determine and prioritize contextually pertinent entries. The system may further aggregate the context relevance scores to flag potential discrepancies, redundant information, and mixed context elements.

At block 610, the system may verify accuracy of the plurality of relevant historical entries, wherein inaccurate historical entries are removed from the plurality of relevant historical entries. The system can verify the accuracy of the data before generating recommendations, so that verified, trustworthy information is used. In some embodiments, the system may use public Application Programming Interfaces (APIs) to cross-check incoming entries and/or historical entries for accuracy. If a historical or incoming entry is inaccurate or misleading, it may be removed the relevant historical entries to not taint the system's suggested recommendations.

As an example, an emergency room (ER) call center may be receiving data during a major unfolding natural disaster, like an earthquake. In the first few incoming calls, the nature of the damage is unclear, and early reports might be vague or asking questions more than reports. Over time, as more accurate data comes in, the system can adjust its recommendations accordingly, assigning greater weight to the verified information. The system can therefore verify the severity of the earthquake (e.g., moderate vs. severe), specific damage assessments (e.g., leaks, overturned buses, tsunamis), and reports of aftershocks or additional hazards. For example, as new data comes in the system may determine that "It's not a tsunami; it's a water main break, as we cross-referenced city social media feeds or police reports," whereas before, the system was limited to only relying on incoming customer/subject reports as the basis for unmoderated information.

At block 612, the system may generate, using a transformer-based module, recommended actions in response to the user input based on the context relevance scores and the plurality of relevant historical entries. The recommended actions may be updated continuously as additional historical entries are retrieved. In some embodiments, the system may generate recommended actions by formulating natural language suggestions that incorporate historical context.

In order to generate the recommended actions, the system may generate candidate recommended actions and rank each candidate based on an estimated impact and confidence in response to the input. Then, the system may select one or more of the recommended actions based on the ranking. After generating the recommended actions, the system may display the recommended actions to the user (e.g., via a UI, such as UI 500 of FIG. 5). The recommended actions may include an option to initiate performance of the recommended actions (e.g., user can select a recommended action which can trigger the system to perform the action).

In some embodiments, the system may generate the recommended actions by cross-referencing the relevant historical entries with historical resolution data. The historical resolution data may be stored in a centralized database, such as communication analysis database 114 of FIG. 1. The system can then identify, using a machine learning model, similar scenarios based on the cross-referencing and extract effective strategies related to the similar scenarios in order to generate the recommended actions.

FIG. 7 illustrates a block diagram of a system 700 that can be employed for dynamically adapting a communication apparatus based on detected health data, as described in greater detail below. System 700 is merely exemplary and embodiments of the system are not limited to the embodiments presented herein. System 700 can be employed in many different embodiments or examples not specifically depicted or described herein. In some embodiments, certain elements or modules of system 700 can perform various procedures, processes, and/or activities. In these or other embodiments, the procedures, processes, and/or activities can be performed by other suitable elements or modules of system 700.

Generally speaking, system 700 can be implemented with hardware and/or software. Part or all of the hardware and/or software implemented in system 700 can be conventional or part or all of the hardware and/or software can be customized (e.g., optimized) for implementing part or all of the functionality of system 700 described herein. When implemented as software, one or more elements of system 700 can be emulated (e.g., reproduced functionally and/or by action via software). For example, a virtual machine having one or more elements described below can be instantiated on one or more elements of system 100 (FIG. 1).

When implemented as hardware, one or more of the elements of system 700 can be coupled together using one or more chassis configured to hold one or more circuit boards and/or serial bus(es). These boards and buses allow the various elements of system 700 to communicate amongst each other to accomplish their intended purposes. While elements of system 700 are described below individually, each can also be integrated into one or more chassis, circuit boards, and/or buses of system 700. On the other hand, one or more elements of system 700 can also be removable (e.g., via a PCI slot on a motherboard and/or a USB port). One or more elements of system 700 may also be integrated and/or embedded in a different machine or manufacture. Although specific constructions of boards and buses within system 700 are not shown, it should be understood that their construction can be tied to a form factor selected for system 700.

System 700 can take a number of different form factors based on its implementation. For example, system 700 can be implemented as a desktop computer, a laptop computer, a mobile device, and/or a wearable device as described herein. Further, system 700 can comprise a single computer, a single server, a cluster or collection of computers or servers, or a cloud of computers or servers. Typically, a cluster or collection of servers can be used when the demand on system 700 exceeds the reasonable capability of a single server or computer, when a distributed structure for system 700 is desired, and/or when parallel computing is desired.

In many embodiments, system 700 can comprise a processor 701, a memory storage 702, an input device 703, a graphics adapter 704, a display device 705, a graphical user interface (GUI) 706, and/or a network adapter 707.

Generally speaking, processor 701 can comprise any type of computational circuit. For example, processor 701 can comprise a microprocessor, a microcontroller, a controller, a complex instruction set computing (CISC) microprocessor, a reduced instruction set computing (RISC) microprocessor, a very long instruction word (VLIW) microprocessor, a graphics processor, a digital signal processor, application specific integrated circuits (ASICs), etc. Processor 701 can be configured to implement (e.g., run) computer instructions (e.g., program instructions) stored on memory devices in system 700. At least a portion of the program instructions, stored on these devices, can be suitable for carrying out at least part of the techniques and methods described herein. Architecture and/or design of processor 701 can be compliant with any of a variety of commercially distributed architecture families. For example, a processor can have a 32-bit (x86) architecture and/or a 64-bit (x86-64, IA64, and AMD64) architecture. Processor 701 can be configured to perform parallel computing in combination with other elements of system 700 and/or additional processors. Generally speaking, parallel computing can be seen as a technique where multiple elements of system 700 are used to perform calculations simultaneously. In this way, complex and repetitive tasks (e.g., training a predictive software application) can be performed faster and with less processing power than without parallel computing.

Generally speaking, memory storage 702 can comprise non-volatile memory (e.g., read only memory (ROM)) and/or volatile memory (e.g., random access memory (RAM)). The non-volatile memory can be removable and/or non-removable non-volatile memory. Meanwhile, RAM can comprise dynamic RAM (DRAM), static RAM (SRAM), or some other type of RAM. Further, ROM can include mask-programmed ROM, programmable ROM (PROM), one-time programmable ROM (OTP), erasable programmable read-only memory (EPROM), electrically erasable programmable ROM (EEPROM) (e.g., electrically alterable ROM (EAROM) and/or flash memory), or some other type of ROM. Memory storage 702 can comprise non-transitory memory and/or transitory memory. All or a portion of memory storage 702 can be referred to as memory storage module(s) and/or memory storage device(s). Memory storage 702 can have a number of form factors when used in system 700. For example, memory storage 702 can comprise a magnetic disk hard drive, a solid state hard drive, a removable USB storage drive, a RAM chip, etc.

Memory storage 702 can be encoded with a wide variety of computer code configured to operate system 700. For example, portions of memory storage 702 can be encoded with a boot code sequence suitable for restoring system 700 to a functional state after a system reset. As another example, portions of memory storage 702 can comprise microcode such as a Basic Input-Output System (BIOS) operable with elements of system 700. Further, portions of the memory storage 702 can comprise an operating system (e.g., a software program that manages the hardware and software resources of a computer and/or a computer network). The BIOS can be configured to initialize and test components of system 700 and load the operating system. Meanwhile, the operating system can perform basic tasks such as, for example, controlling and allocating memory, prioritizing the processing of instructions, controlling input and output devices, facilitating networking, and/or managing files. Exemplary operating systems can comprise software within the Microsoft^{®} Windows^{®}, Mac OS^{®}, Apple^{®} iOS^{®}, Google^{®} Android^{®}, UNIX^{®}, and/or Linux^{®} series of operating systems.

Input device 703 can be configured to allow a user to interact and/or control elements of system 700. A number of devices and be used as input device 703 alone or in combination. For example, input device 703 can comprise a keyboard, a mouse, a touch screen, a microphone, a camera, etc. Input device 703 can be coupled to other elements of system 700 in a number of ways. For example, input device 703 can be coupled via a Universal Serial Bus (USB) port in a wired and/or wireless manner or via a specialized port (e.g., a PS/2 port) depending on the specific device. User inputs through input device 703 can come in a number of forms. For example, when input device 703 comprises a microphone, user input can be received via voice commands and/or a speech to text software application. As another example, when input device 703 comprises a camera, user input can be received via bodily movements that are captured and interpreted by system 700.

Generally speaking, graphics adapter 704 can be configured to receive and/or generate one or more elements for display on display device 705. Exemplary embodiments of graphics adapter 704 can comprise devices within the NVIDIA^{®} GeForce^{®} and/or the AMD^{®} RX^{®} series of video cards. In many embodiments, a chipset present on graphics adapter 704 can be configured to perform similar, simultaneous computations in a manner more efficient than other chipsets. For example, rendering a 3D scene on graphics adapter 704 can involve repeated geometric calculations performed in parallel to generate the 3D scene. As another example, repeated mathematical calculations involved in training a predictive software application can be performed in parallel on graphics adapter 704 more efficiently thank on processor 701. Display device 705 can receive and display signals from graphics adapter 704. A number of devices can be used as display device 705. For example, display device 705 can comprise a computer monitor, a television, a touch screen display, a heads up display (HUD) medium, etc.

In some embodiments, display device 705 can optionally display graphical user interface (GUI) 706. GUI 706 can be a part of and/or displayed by Participant devices 108, 110. With regards to form, GUI 706 can comprise text and/or graphics (image) based user interfaces. For example, GUI 706 can comprise a heads up display (HUD). When GUI 706 comprises a HUD, GUI 706 can be projected onto a medium (e.g., glass, plastic, metal, etc.), displayed in midair as a hologram, and/or displayed on display device 705. GUI 706 can be color, black and white, and/or greyscale. GUI 706 can be implemented as an application running on a computer system, such as computer system 700, videoconference server 102 (FIG. 1), multi-channel communication analysis server 112 (FIG. 1), and/or participant devices 108, 110 (FIG. 1). GUI 706 can also comprise a website accessed through a network (e.g., network 120 (FIG. 1)). For example, GUI 706 can comprise a cloud storage website. When GUI 706 allows for modification and/or changes to one or more settings in system 700, it can be referred to as an administrative (e.g., back end) GUI. GUI 706 can also be displayed as or on a virtual reality (VR) and/or augmented reality (AR) system or display. GUI 706 can receive a number of interactions from a user via input device 703. For example, an interaction with a GUI can comprise a click, a look, a selection, a grab, a view, a purchase, a bid, a swipe, a pinch, a reverse pinch, etc.

Network adapter 707 can be configured to connect system 700 to a computer network by wired communication (e.g., a wired network adapter) and/or wireless communication (e.g., a wireless network adapter). Network adapter 707 can be integrated into one or more chassis, circuit boards, and/or buses or be removable (e.g., via a PCI slot on a motherboard). For example, network adapter 707 can be implemented via one or more dedicated communication chips configured to receive various protocols of wired and/or wireless communications.

For simplicity and clarity of illustration, the drawing figures illustrate the general manner of construction, and descriptions and details of some features and techniques may be omitted to avoid unnecessarily obscuring the present disclosure. Additionally, elements in the drawing figures are not necessarily drawn to scale. For example, the dimensions of some of the elements in the figures may be exaggerated relative to other elements to help improve understanding of embodiments of the present disclosure. The same reference numerals in different figures denote the same elements.

The terms "first," "second," "third," "fourth," and the like in the description and in the claims, if any, are used for distinguishing between similar elements and not necessarily for describing a particular sequential or chronological order. It is to be understood that the terms so used are interchangeable under appropriate circumstances such that the embodiments described herein are, for example, capable of operation in sequences other than those illustrated or otherwise described herein. Furthermore, the terms "include," and "have," and any variations thereof, are intended to cover a non-exclusive inclusion, such that a process, method, system, article, device, or apparatus that comprises a list of elements is not necessarily limited to those elements but may include other elements not expressly listed or inherent to such process, method, system, article, device, or apparatus.

The terms "left," "right," "front," "back," "top," "bottom," "over," "under," and the like in the description and in the claims, if any, are used for descriptive purposes and not necessarily for describing permanent relative positions. It is to be understood that the terms so used are interchangeable under appropriate circumstances such that the embodiments of the apparatus, methods, and/or articles of manufacture described herein are, for example, capable of operation in other orientations than those illustrated or otherwise described herein.

The terms "couple," "coupled," "couples," "coupling," and the like should be broadly understood and refer to connecting two or more elements mechanically and/or otherwise. Two or more electrical elements may be electrically coupled together, but not be mechanically or otherwise coupled together. Coupling may be for any length of time, e.g., permanent or semi-permanent or only for an instant. "Electrical coupling" and the like should be broadly understood and include electrical coupling of all types. The absence of the word "removably," "removable," and the like near the word "coupled," and the like does not mean that the coupling, etc. in question is or is not removable.

As defined herein, two or more elements are "integral" if they are comprised of the same piece of material. As defined herein, two or more elements are "non-integral" if each is comprised of a different piece of material.

As defined herein, "real-time" can, in some embodiments, be defined with respect to operations carried out as soon as practically possible upon occurrence of a triggering event. A triggering event can include receipt of data necessary to execute a task or to otherwise process information. Because of delays inherent in transmission and/or in computing speeds, the term "real time" encompasses operations that occur in "near" real time or somewhat delayed from a triggering event. In a number of embodiments, "real time" can mean real time less a time delay for processing (e.g., determining) and/or transmitting data. The particular time delay can vary depending on the type and/or amount of the data, the processing speeds of the hardware, the transmission capability of the communication hardware, the transmission distance, etc. However, in many embodiments, the time delay can be less than approximately one second, two seconds, five seconds, or ten seconds.

As defined herein, "approximately" can, in some embodiments, mean within plus or minus ten percent of the stated value. In other embodiments, "approximately" can mean within plus or minus five percent of the stated value. In further embodiments, "approximately" can mean within plus or minus three percent of the stated value. In yet other embodiments, "approximately" can mean within plus or minus one percent of the stated value.

Although systems and methods for context dependent invocation of predictive software application and data storage have been described with reference to specific embodiments, it will be understood by those skilled in the art that various changes may be made without departing from the scope of the disclosure. Accordingly, the disclosure of embodiments is intended to be illustrative of the scope of the disclosure and is not intended to be limiting. It is intended that the scope of the disclosure shall be limited only to the extent required by the appended claims. For example, to one of ordinary skill in the art, it will be readily apparent that any element of FIGS. 1-7 may be modified, and that the foregoing discussion of certain of these embodiments does not necessarily represent a complete description of all possible embodiments. For example, one or more of the procedures, processes, or activities of FIG. 1 may include different procedures, processes, and/or activities and be performed by many different modules, in many different orders.

All elements claimed in any particular claim are essential to the embodiment claimed in that particular claim. Consequently, replacement of one or more claimed elements constitutes reconstruction and not repair. Additionally, benefits, other advantages, and solutions to problems have been described with regard to specific embodiments. The benefits, advantages, solutions to problems, and any element or elements that may cause any benefit, advantage, or solution to occur or become more pronounced, however, are not to be construed as critical, required, or essential features or elements of any or all of the claims, unless such benefits, advantages, solutions, or elements are stated in such claim.

Moreover, embodiments and limitations disclosed herein are not dedicated to the public under the doctrine of dedication if the embodiments and/or limitations: (1) are not expressly claimed in the claims; and (2) are or are potentially equivalents of express elements and/or limitations in the claims under the doctrine of equivalents.

## Claims

1. A computerized method for analyzing cross-channel communications and generating recommended actions for a user, the method comprising:
receiving user input from a user in real-time from a first communication channel;
processing the user input to identify user information and an intent classification of the user input;
retrieving in real-time, from an encrypted personal vault or a second communication channel, a plurality of relevant historical entries to the user input based on the user information and the intent classification, wherein the encrypted personal vault comprises an indexed binary embedding file of historical entries;
analyzing the plurality of relevant historical entries to determine a context relevance score for each of the plurality of relevant historical entries, wherein the context relevance score indicates the level of relevance of each of the plurality of relevant historical entries to the user input;
verifying accuracy of the plurality of relevant historical entries, wherein inaccurate historical entries are removed from the plurality of relevant historical entries; and
generating, using a transformer-based module, recommended actions in response to the user input from the user based on the context relevance scores and the plurality of relevant historical entries, wherein the recommended actions are updated continuously as additional historical entries are retrieved.

2. The computerized method of claim 1, wherein the indexed binary embedding file comprises a plurality of embeddings stored with in-memory data structures and clustering techniques.

3. The computerized method of claim 1 or claim 2, wherein determining the context relevance score comprises calculating the context relevance score using a weighted function that factors semantic similarity, temporal proximity using a time-decay function, and channel-specific metadata to determine and prioritize contextually pertinent entries.

4. The computerized method of claim 3, further comprising aggregating the context relevance scores to flag potential discrepancies, redundant information, and missed context elements.

5. The computerized method of any preceding claim, wherein generating recommended actions comprises formulating natural language suggestions that incorporate historical context.

6. The computerized method of any preceding claim, wherein generating recommended actions comprises:
generating a plurality of candidate recommended actions;
ranking each candidate recommended action of the plurality of candidate recommended actions based on estimated impact and confidence; and
selecting one or more recommended actions of the plurality of ranked candidate recommended actions based on the ranking.

7. The computerized method of any preceding claim, further comprising:
displaying the recommended actions to the user, wherein the recommended actions include an option to initiate performance of the recommended actions.

8. The computerized method of any preceding claim, wherein the user information comprises one or more of user account number, user email addresses, or user account name.

9. The computerized method of any preceding claim, wherein the second communication channel comprises one or more of phone call, online chat session, email, or social media.

10. The computerized method of any preceding claim, wherein retrieving in real-time the plurality of relevant historical entries comprises:
stitching logic maps overlapping historical entries of the user by matching identifiers of the user, timestamps, and context keywords; and
retrieving relevant historical entries based on the logic maps.

11. The computerized method of any preceding claim, wherein generating recommended actions comprises:
cross-referencing the plurality of relevant historical entries with historical resolution data stored in a centralized database;
identifying, using a machine learning model, similar scenarios based on the cross-referencing; and
extracting effective strategies related to the similar scenarios to generate the recommended actions.

12. A system comprising:
a communication apparatus configured to receive real-time user input from a user; and
a processor configured to:
receive user input from a user in real-time from the communication apparatus;
process the user input to identify an intent classification of the user input;
retrieve in real-time, from an encrypted personal vault, a plurality of relevant historical entries to the user input based on the intent classification, wherein the encrypted personal vault comprises an indexed binary embedding file of historical entries;
analyze the plurality of relevant historical entries to determine a context relevance score for each of the plurality of relevant historical entries, wherein the context relevance score indicates the level of relevance of each of the plurality of relevant historical entries to the user input; and
generating, using a transformer-based module, recommended actions in response to the user input from the user based on the context relevance scores and the plurality of relevant historical entries, wherein the recommended actions are updated continuously as additional historical entries are retrieved.

13. The system of claim 12, wherein the indexed binary embedding file comprises a plurality of embeddings stored with in-memory data structures and clustering techniques and/or wherein to determine the context relevance score, the processor is further configured to calculate the context relevance score using a weighted function that factors semantic similarity, temporal proximity using a time-decay function, and channel-specific metadata to determine and prioritize contextually pertinent entries and optionally wherein to determine the context relevance score, the processor is further configured to aggregate the context relevance scores to flag potential discrepancies, redundant information, and missed context elements.

14. The system of claim 12 or claim 13, wherein to generate the recommended actions, the processor is further configured to formulate natural language suggestions that incorporate historical context
and/or wherein to generate the recommended actions, the processor is further configured to:
generate a plurality of candidate recommended actions;
rank each candidate recommended action of the plurality of candidate recommended actions based on estimated impact and confidence; and
select one or more recommended actions of the plurality of ranked candidate recommended actions based on the ranking
and/or wherein the processor is further configured to display the recommended actions to the user, wherein the recommended actions include an option to initiate performance of the recommended actions.

15. A computerized method comprising:
receiving user input from a user in real-time from a first communication channel;
processing the user input to identify user information of the user input;
retrieving in real-time, from a second communication channel, a plurality of relevant historical entries to the user input based on the user information;
cross-referencing the plurality of relevant historical entries with historical resolution data stored in a centralized database;
identifying, using a machine learning model, similar scenarios based on the cross-referencing; and
extracting effective strategies related to the similar scenarios to generate recommended actions in response to the user input from the user, wherein the recommended actions are updated continuously as additional historical entries are retrieved, and optionally wherein retrieving in real-time the plurality of relevant historical entries comprises:
stitching logic maps overlapping historical entries of the user by matching identifiers of the user, timestamps, and context keywords; and
retrieving relevant historical entries based on the logic maps.
